# EUROPÄISCHE PATENTSCHRIFT

(11) **EP 2 093 107 B1**
(45) Veröffentlichungstag und Bekanntmachung des Hinweises auf die Patenterteilung: **17.10.2012**
(21) Anmeldenummer: 09002241.9
(22) Anmeldetag: 18.02.2009
(51) Int. Cl.: B60R 7/04

(54) **Lagerung eines Containers in einem Fahrgastraum eines Kraftfahrzeugs**
Storage of a container in a passenger area of a motor vehicle
Stockage d'un conteneur dans un espace passager d'un véhicule automobile

(30) Priorität: 21.02.2008 DE 102008010393; 21.02.2008 DE 102008010395
(43) Veröffentlichungstag der Anmeldung: 26.08.2009
(73) Patentinhaber: GM Global Technology Operations LLC, Detroit, MI 48265-3000 (US)
(72) Erfinder: Blanck, Matthias, 65779 Kelkheim (DE); Graf, Michael, 35638 Leun (DE); Dörhöfer, Andreas, 65439 Flörsheim-Weilbach (DE)
(74) Vertreter: Strauss, Peter

(56) Entgegenhaltungen:
- DE-A1- 10 236 582

## Beschreibung

Die Erfindung betrifft die Lagerung eines Containers in einem Schienenpaar, das in einem Fahrgastraum eines Kraftfahrzeugs angeordnet ist, wobei die Schienen des Schienenpaars auf den einander zugewandten Seiten sich im wesentlichen horizontal erstreckende Führungsnuten aufweisen und ihm Container auf dessen der jeweiligen Schiene zugewandten Seite ein Vorsprung gelagert ist, wobei die jeweilige Führungsnut einen sich vom Nutgrund erweiternden Querschnitt aufweist sowie der jeweilige Vorsprung einen entsprechenden sich zum Container hin erweiterten Querschnitt aufweist.

Eine derartige Lagerung eines Containers in einem Schienenpaar ist aus der DE 20 2006 019 121 U1 bekannt. Dort ist die jeweilige Schiene gebogen und im Bereich eines Endes im Bereich des Bodens des Kraftfahrzeuges und im Bereich des anderen Endes in einer Armaturentafel des Kraftfahrzeuges gelagert. Die Schiene weist in ihrem oberen, im wesentlichen waagerecht verlaufenden Bereich die Führungsnut auf, die hinten offen ist. Es besteht somit die Möglichkeit, den Container von hinten in die Führungsnuten der Schienen des Schienenpaares einzuschieben und den Container zu montieren bzw. bei umgekehrter Bewegungsabfolge zu demontieren. Der jeweilige Vorsprung ist fest mit dem Container verbunden. Zusätzlich ist ein Mittel zum Verriegeln des Containers bezüglich der Schiene vorgesehen. Hierdurch ist ein sicherer Halt des Containers während der Fahrt gewährleistet.

Nachteilig ist bei dieser Gestaltung, dass der Container immer nur in Längsrichtung der Führungsnuten des Schienenpaars montiert und demontiert werden kann. Insbesondere bei einer Anordnung des Containers zwischen den Vordersitzen eines Kraftfahrzeuges ist dies ergonomisch ungünstig, weil die Demontage bzw. Montage nur von den dahinter befindlichen Sitzen aus vorgenommen werden kann. Im übrigen wird hierbei erheblicher Platz im Bereich der hinteren Sitze benötigt.

Aus der DE 102 08 886 A1 ist die Lagerung eines Containers in einem Schienenpaar eines Kraftfahrzeuges bekannt. Dort weisen die Schienen auf ihre aneinander zugewandten Seiten, im oberen Bereich der jeweiligen Schiene, einen Rücksprung auf, der der Auflage des Containers dient. Der Container lässt sich somit von oben auf die Schienen aufsetzen. Zusätzlich ist die jeweilige Schiene unterhalb des Lagerbereichs des Containers mit einer sich über die Länge der Schiene erstreckenden Nut versehen, in die ein im Container schwenkbar gelagerter Riegel einschwenkbar ist. Hierdurch ist einerseits sichergestellt, dass der Container und die Schiene verklemmt sind, andererseits der Container nicht vom Schienenpaar abgehoben werden kann. In einer alternativen Gestaltung wird vorgeschlagen, den Container mit einem ausfahrbaren Rastglied zu versehen und statt der Nut in der Schiene diese mit einer Vielzahl von Löchern zu versehen, in die das Rastglied in der jeweiligen Position des Containers eingreift. Hierdurch ist statt der Arretierung des Containers mittels Klemmung die Arretierung des Containers durch Formschluss sichergestellt. - Nachteilig ist bei dieser Lagerung die unzureichende Führung des Containers im Schienenpaar aufgrund der Auflage des Containers auf den Schienen, womit die Verschiebbarkeit des Containers beeinflussende Reibkräfte zwischen Container und Schienen nur aus dem Gewicht des Containers resultieren, nicht aber aus einer Formgestaltung der Anordnung von Container und Schienen. Des Weiteren ist die Gestaltung der Lagerung unter dem Aspekt der Klemmung bzw. Rastierung des Containers aufwendig.

Aus der DE 102 36 582 A1 ist eine Lagerung eines Containers in einem in einem Fahrgastraum eines Kraftfahrzeuges angeordneten Schienenpaar beschrieben, wobei der Container vorne und hinten sowie beidseitig mit schwenkbaren Sperrhebeln versehen ist. Der jeweilige Sperrhebel ist um eine oberhalb der zugeordneten Schiene angeordnete Achse im Container gelagert und weist einen Vorsprung auf, der in eine Führungsnut der Schiene einführbar ist. In der Einführrichtung sind die jeweiligen Sperrhebel vorgespannt. Sie können entgegen der Kraft von Federn zurückbewegt werden, so dass sie außer Eingriff mit den Führungsnuten gelangen und damit der Container von den Schienen abgenommen werden kann.

In der DE 199 08 909 A1 ist eine Lagerung eines Containers in einem Schienenpaar, das in einem Fahrgastraum eines Kraftfahrzeuges angeordnet ist, beschrieben. Dort sind ein Deckel und eine mittels des Deckels verschließbare Ablageschale des Containers unabhängig voneinander in den Schienen verschieblich. Zwischen dem Deckel und der Ablageschale sind durch gegenseitiges Verrasten unterschiedliche Relativstellungen zueinander möglich. Es ist wahlweise möglich, die Ablageschale mit dem Deckel zu verrasten oder einen Zustand einzustellen, bei dem der Deckel und die Ablageschale gegeneinander bewegbar sind. Je nachdem, von welcher der beiden Möglichkeiten Gebrauch gemacht wird, ist entweder der Deckel für sich allein oder zwangsläufig zusammen mit der Ablageschale verschiebbar.

In der JP 2001158300 A ist eine Lagerung des Containers in einem Schienenpaar, das in einem Fahrgastraum eines Kraftfahrzeugs angeordnet ist, beschrieben, bei der ein mittels Federkraft vorgespannter Stift zum Verriegeln von Container und Schiene vorgesehen ist. Der Verriegelungsstift ist in der Verriegelungsposition des Containers in eine Öffnung der Führungsschiene einsetzbar.

Aufgabe der vorliegenden Erfindung ist es, eine Lagerung der eingangs genannten Art so weiter zu bilden, dass bei baulich einfacher Gestaltung der Lagerung eine einfache und ergonomisch günstige Montage und Demontage von Container und Schienenpaar gewährleistet ist.

Gelöst wird die Aufgabe bei einer Lagerung der eingangs genannten Art dadurch, dass der jeweilige Vorsprung Bestandteil eines in dem Container verschieblich gelagerten Bolzens ist, wobei eine Feder auf den Bolzen einwirkt und dessen Vorsprung gegen die Führungsnut vorspannt sowie der Bolzen mittels eines im Container gelagerten Stellglieds entgegen der Kraft der Feder aus der Führungsnut bewegbar ist.

Erfindungsgemäß ist somit auf jeder der beiden Seiten des Containers, die der Schiene des Schienenpaars zugeordnet ist, ein Bolzen verschieblich im Container gelagert, wobei dieser Bolzen den Vorsprung aufweist. Unter Einwirkung der Feder wird der Bolzen im Bereich seines Vorsprungs gegen die Führungsnut bewegt, womit in Längserstreckung der Führungsnut eine reibschlüssige Verbindung zwischen Container und Schiene erzeugt wird. Senkrecht hierzu ist aufgrund der Gestaltung des Querschnitts des Vorsprungs und des Querschnitts der Führungsnut ein Formschluss zwischen Vorsprung und Schiene gegeben. Dies bedingt eine spielfreie Lagerung mit der Möglichkeit, bei Überwindung des Reibschlusses den Container relativ zu den Schienen zu verschieben. Die Vorspannung, die über die Feder ausgeübt wird, kann so bemessen sein, dass der Container bei üblichen im Kraftfahrzeug wirkenden Beschleunigungs- bzw. Bremskräften sich nicht selbstständig bezüglich der Schienen verschiebt.

Die verschiebliche Lagerung der Bolzen ermöglicht es dann, wenn die Bolzen vollständig in den Container eingeschoben sind, den Container senkrecht zu der die Schienen verbindenden Ebene zu entnehmen bzw. in umgekehrter Bewegungsrichtung zu montieren. Es ist somit nicht erforderlich, den Container, um diesen vom Schienenpaar zu lösen, nach hinten zu verschieben.

Die Lagerung des Containers in dem Schienenpaar kann derart erfolgen, dass der Container, bezogen auf die Längserstreckung der Führungsnuten, im Bereich eines Endes zwei verschiebliche Vorsprünge aufweist, die mit den beiden Schienen zusammenwirken und auch im Bereich des anderen Endes zwei verschiebliche Vorsprünge besitzt, die mit den beiden Schienen zusammenwirken. Es ist durchaus denkbar, nur in einem Endbereich des Containers die erfindungsgemäße Lagerung vorzusehen. Im anderen Endbereich des Containers kann die Lagerung auf andere Art und Weise verwirklicht sein, insbesondere eine Lagerung, die eine Arretierung des Containers in Schienenlängsrichtung gestattet.

Bei der erfindungsgemäßen Lagerung wird die Zentrierung des Containers über die besondere Querschnittsform von Führungsnut und Vorsprung erreicht. Der Vorsprung ist insbesondere als Kegelstumpf ausgebildet und es weist die Führungsnut einen entsprechend kegelstumpfförmigen Querschnitt auf. Aufgrund des Zusammenwirkens des Bolzens mit dessen Vorsprung, wobei der Bolzen einen kreisförmigen Querschnitt aufweist, findet eine Linienberührung zwischen Vorsprung und Schiene statt. Bei einer solchen Querschnittsgestaltung ergeben sich besonders günstige Gleiteigenschaften zwischen Container und Schienen. Dies ist dann von besonderem Vorteil, wenn zusätzlich Mittel zum Arretieren von Container und Schienen vorgesehen sind. Günstige Gleiteigenschaften lassen sich insbesondere dann erreichen, wenn der Bolzen aus Kunststoff besteht, insbesondere einem Polyoxymethylen-Kunststoff besteht. Auch kann die Führungsnut mit einer bezüglich Gleiteigenschaften optimierten Oberfläche versehen sein. Hierbei handelt es sich vorzugsweise um eine eloxierte Oberfläche.

Gemäß einer besonderen Ausführungsform der Erfindung ist vorgesehen, dass die beiden Bolzen in einer Flucht angeordnet sind und die Feder die beiden Bolzen beaufschlagt. Insbesondere ist die Feder als Schraubendruckfeder ausgebildet, die in den beiden Bolzen gelagert ist. Bei baulich einfacher Gestaltung können somit beide Bolzen kraftbeaufschlagt werden, und zwar mit derselben Kraft, so dass im wesentlichen dieselben Reibschlusskräfte zwischen den beidseitig des Containers angeordneten Vorsprüngen und den Führungsnuten gewährleistet sind.

Auf baulich besonders einfache Art und Weise lässt sich die Verschiebung des Bolzens gegen die Kraft der Feder mittels des Stellglieds erreichen, wenn das Stellglied mittels eines manuell betätigbaren Bestätigungselements, insbesondere eines Betätigungsgriffs, um eine stationäre Achse des Containers schwenkbar ist. Vorzugsweise sind mittels des Betätigungselements zwei Stellglieder gleichzeitig schwenkbar, so dass die Bolzen synchron bewegt werden können. Die Bewegung des Bolzens mittels des Stellgliedes lässt sich auf besonders einfache Art und Weise bewerkstelligen, wenn das Stellglied einen Hebelarm aufweist, der in eine Nut des Bolzens eingreift. Greift an beiden Stellgliedern zusätzlich eine Zugfeder an, ist nicht nur gewährleistet, dass die Stellglieder den Bolzen definiert kontaktieren, im Sinne einer Spielfreiheit und damit Geräuschreduzierung, sondern es kann zudem eine Überlagerung der Kraft dieser Zugfeder mit der Vorspannungskraft der anderen Feder, die unmittelbar mit dem Bolzen zusammenwirkt, stattfinden.

Um die maximale Ausfahrstrecke des Bolzens zu begrenzen, insbesondere unter dem Aspekt des vom Schienenpaar demontierten Containers, ist zweckmäßig vorgesehen, dass der jeweilige Bolzen mit einem Anschlag zum Begrenzen der Bewegung des Bolzens in Richtung der Führungsnut versehen ist. Bei diesem Anschlag kann es sich um einen mit dem Bolzen verbundenen Sicherungsring handeln, oder es ist, insbesondere bei aus Kunststoff bestehendem Bolzen, unmittelbar der Anschlag Bestandteil des Bolzens.

Die erfindungsgemäße Lagerung findet insbesondere bei einem Schienenpaar Verwendung, bei dem die jeweilige Schiene gebogen und im Bereich eines Endes im Boden des Kraftfahrzeuges und im Bereich des anderen Endes im Boden oder in der Armaturentafel des Kraftfahrzeugs gelagert ist, wobei die Schiene in einem oberen, im wesentlichen waagerecht verlaufenden Bereich die Führungsnut aufweist. Diese kann, insbesondere aus Fertigungsgründen, im Bereich eines Endes, insbesondere des hinteren Endes, offen sein. Dies ist aber im erfindungsgemäßen Sinne nicht notwendig.

Gemäß einer besonders bevorzugten Weiterbildung der Erfindung sind Mittel zur verriegelten Lagerung des Containers im Schienenpaar vorgesehen, wobei der jeweilige Bolzen mittels Federkraft aus dem Gehäuse verschiebbar ist, sowie der jeweilige Bolzen das Mittel zum Verriegeln verschieblich aufnimmt, das als Verriegelungsstift ausgebildet ist, wobei die diesem Verriegelungsstift zugewandte Führungsnut mindestens eine Ausnehmung zur Aufnahme des Verriegelungstifts aufweist, wobei ferner der Verriegelungsstift mittels Federkraft in Richtung dieser Führungsnut vorgespannt ist und der Verriegelungsstift mittels eines im Container gelagerten Stellglieds in dessen Längsrichtungen verschiebbar ist, sowie dieser Verriegelungsstift mit einem Anschlag versehen ist, der den Bolzen beim Verschieben des Verriegelungstifts in den Container kontaktiert.

Hierdurch ergibt sich einerseits eine sichere Verriegelung von Container und Schiene, andererseits ist eine einfache Demontage und Montage von Container und Schienenpaar möglich.

Eine derartige Lagerung eines Containers in einem Schienenpaar ermöglicht ein vertikales Einsetzen bzw. Entnehmen des Containers in das bzw. vom Schienenpaar. Weiterhin kann der Container formschlüssig mit dem Schienenpaar verbunden werden. In der Rastfunktion ist der Container formschlüssig im Schienenpaar fixiert. Ist die Rastfunktion freigegeben, kann der Container aufgrund des Zusammenwirkens der Vorsprünge mit den Führungsnuten der Schienen frei bewegt werden. In der Entnahmefunktion sind die Verriegelungsstifte und die Bolzen, somit die Verriegelungsstifte und die Vorsprünge so weit aus den Führungsnuten der Schienen bewegt, dass ein vertikales Entnehmen des Containers möglich ist.

Diese Lagerung ermöglicht eine einfache, sinnvolle Einhandbedienung zum Entriegeln und Verschieben des Containers. Der Container kann zudem ergonomisch günstig montiert werden.

Zum Aufheben der Rastfunktion werden vorzugsweise bei Betätigen eines Betätigungsgriffs die Verriegelungsstifte gegen die Kraft einer Feder innerhalb der Bolzen aus den Ausnehmungen der Schienen nach innen bewegt, so dass ein Verschieben des Containers innerhalb der Führungsnuten der Schienen möglich wird. Nach dem Loslassen des Betätigungsgriffs zieht die Feder, insbesondere über Hebel, die Verriegelungsstifte in deren Ausgangsstellung zurück. Der Container ist somit formschlüssig mit der Schiene verrastet.

Zum Entnehmen des Containers wird vorzugsweise der Betätigungsgriff über die Position, die das Verschieben des Containers gestattet, somit in die Rastfunktion hinaus bewegt. Dabei Betätigen insbesondere Hebel die Verriegelungsstifte und ziehen die Bolzen mit den Vorsprüngen über einen Anschlag gegen die Kraft einer Feder soweit in das Innere des Containers, dass eine Entnahme des Containers möglich wird. Das Einsetzen bzw. Montieren des Containers erfolgt in umgekehrter Reihenfolge. Eine Feder drückt die Bolzen mit den Vorsprüngen in deren Ausgangsstellung bis zu einem Anschlag zurück.

Die Funktion der zweistufigen Betätigung ist vorzugsweise so ausgeführt, dass der Bediener zwischen der Rastfunktion und der Entnahmefunktion eine spürbare Krafterhöhung wahrnimmt. Dadurch wird ein zu weites Zurückziehen der Bolzen und somit ein versehentliches Entnehmen des Containers verhindert. Aus diesem Grund ist eine optimale Abstimmung der Kraft der Feder, die auf die Verriegelungsstifte einwirkt und der Kraft, die auf die Bolzen einwirkt, erforderlich. Zusätzlich kann auch ein akustisches oder haptisches Signal, beispielsweise ein leichtes Einrasten, als weitere Sicherung gegen Fehlbedienung vorhanden sein.

In aller Regel wird die Lagerung des Containers in dem Schienenpaar derart erfolgen, dass der Container, bezogen auf die Längserstreckung der Führungsnuten, im Bereich eines Endes zwei verschiebliche Vorsprünge aufweist, die mit den beiden Schienen zusammenwirken und auch im Bereich des anderen Endes zwei verschiebliche Vorsprünge besitzt, die mit den beiden Schienen zusammenwirken. Es reicht aus, nur in einem Endbereich des Containers die gemäß der Erfindung vorgesehene Verriegelung des Containers vorzusehen. Im anderen Bereich des Containers kann die Lagerung auf eine ausschließliche Gleitlagerung in den Führungsnuten, ohne Arretierung, mit der Möglichkeit, durch Ein- und Ausfahren der Bolzen den Container zu montieren bzw. zu demontieren, beschränkt sein.

Der jeweilige Bolzen weist insbesondere einen Anschlag zum Begrenzen der Ausfahrbewegung des Bolzens durch Anlage des Anschlags am Gehäuse des Containers auf. Ist der Container montiert und kontaktiert der jeweilige Vorsprung die Führungsnut, liegt der Bolzen gerade noch nicht mit seinem Anschlag am Gehäuse an. Wird der Container demontiert, kann der Bolzen nur geringfügig breiter aus dem Gehäuse ausfahren.

Insbesondere konzentrisch zum Bolzen ist in einer Durchgangsbohrung des Bolzens der Verriegelungsstift verschiebbar gelagert. Der Verriegelungsstift ist zwischen einer Position, in der das dem Container abgewandte Ende des Verriegelungsstifts vollständig in den Bolzen eingefahren ist und einer Position, in der der Verriegelungsstift mit diesem Ende aus dem Bolzen herausgefahren ist, zwecks Verriegelung mit der Schiene verfahrbar. Insbesondere weist der Verriegelungsstift einen Kreisquerschnitt auf und es weist die jeweilige Ausnehmung zur Aufnahme des Verriegelungsstifts einen geringfügig größeren Kreisquerschnitt auf.

Beim Einfahren des Verriegelungsstifts gelangt dessen Anschlag gegen den Bolzen und zieht beim weiteren Einfahren damit den Bolzen entsprechend mit, wodurch sowohl der Verriegelungsstift als auch der Bolzen in eine eingefahrene Position überführt werden können, in der die Demontage des Containers möglich ist, somit der Container vertikal entnommen werden kann.

Vorzugsweise sind die beiden Stellglieder zum Verschieben der beiden Verriegelungsstifte gleichzeitig mittels des Betätigungselements, insbesondere des Betätigungsgriffs schwenkbar und es greift an beiden Stellgliedern eine Zugfeder, insbesondere eine Schraubenzugfeder an. Diese Zugfeder wirkt somit auf die Verriegelungsstifte im Sinne einer Rückstellbewegung zum Überführen der Verriegelungsstifte in deren Verriegelungsposition. Das jeweilige Stellglied ist somit mittels der Feder bezüglich des Verriegelungsstifts vorgespannt, und zwar in einer Vorspannrichtung, die der Vorspannrichtung des jeweiligen Bolzens unter Einwirkung dessen zugeordneter Feder entspricht.

Besonders einfach lässt sich die Stellkraft in den Verriegelungsstift einleiten, wenn das jeweilige Stellglied einen Hebelarm aufweist, der in eine Ausnehmung des Verriegelungsstifts eingreift. Das der Führungsnut zugewandte Ende des Bolzens ist insbesondere mit einem radialen Rücksprung versehen, den der Anschlag am Verriegelungsstift durchsetzt. Hierdurch lässt sich baulich besonders einfach die Mitnahmefunktion zwischen Verriegelungsstift und Bolzen verwirklichen.

Die jeweilige Schiene ist im Bereich der Führungsnut vorzugsweise mit mehreren, in Längsrichtung der Führungsnut angeordneten Ausnehmungen versehen, um den Container in unterschiedlichen Längspositionen der Schiene mit dieser rastieren zu können.

Bevorzugte Weiterbildungen der Erfindung ergeben sich aus den Unteransprüchen, der nachfolgenden Beschreibung der Zeichnung sowie der Zeichnung selbst.

Nachfolgend werden bevorzugte Ausführungsbeispiele der Erfindung, ohne hierauf beschränkt zu sein, unter Bezugnahme auf die Zeichnung näher erläutert. Es zeigt:
- Figur 1: für eine erste Ausführungsform der Erfindung, in einer räumli- chen Ansicht die Anordnung eines Schienenpaares und eines im Schienenpaar gelagerten Contai- ners in einem Fahrgastraum eines Kraftfahrzeuges, wobei der Con- tainer schräg von hinten gesehen ist,
- Figur 2: einen vertikalen Schnitt durch die in Figur 1 gezeigte Anord- nung von Container und Schienen- paar im Bereich der hinteren La- gerung des Containers im Schie- nenpaar,
- Figur 3: für eine zweite Ausführungsform der Erfindung, in einer räumli- chen Ansicht, die Anordnung ei- nes Schienenpaares und eines im Schienenpaar gelagerten Contai- ners in einem Fahrgastraum eines Kraftfahrzeuges, wobei der Con- tainer schräg von vorne gesehen ist,
- Figur 4: einen vertikalen Schnitt durch die in Figur 3 gezeigte Anord- nung von Container und Schienen- paar im Bereich der vorderen La- gerung des Containers im Schie- nenpaar.

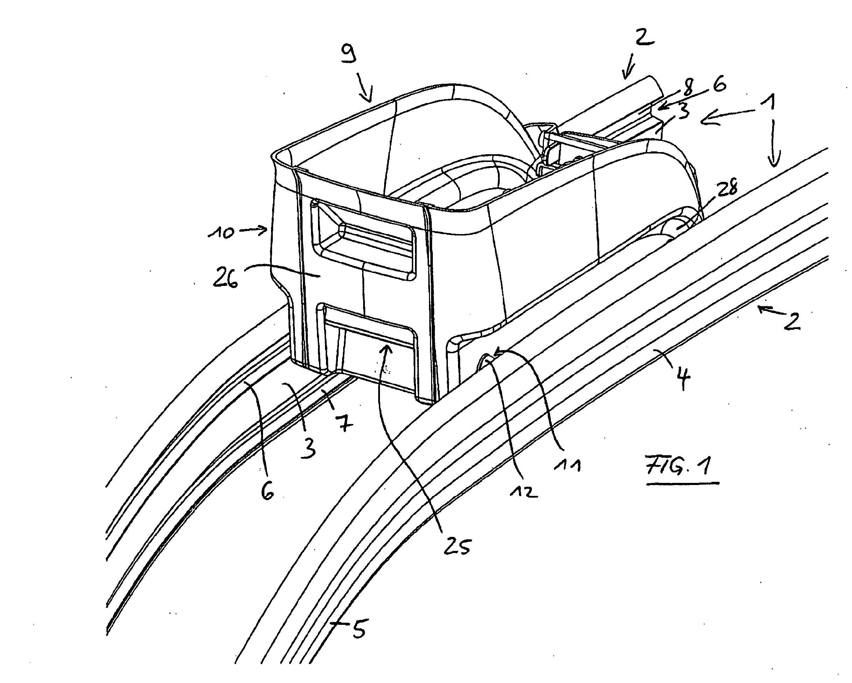

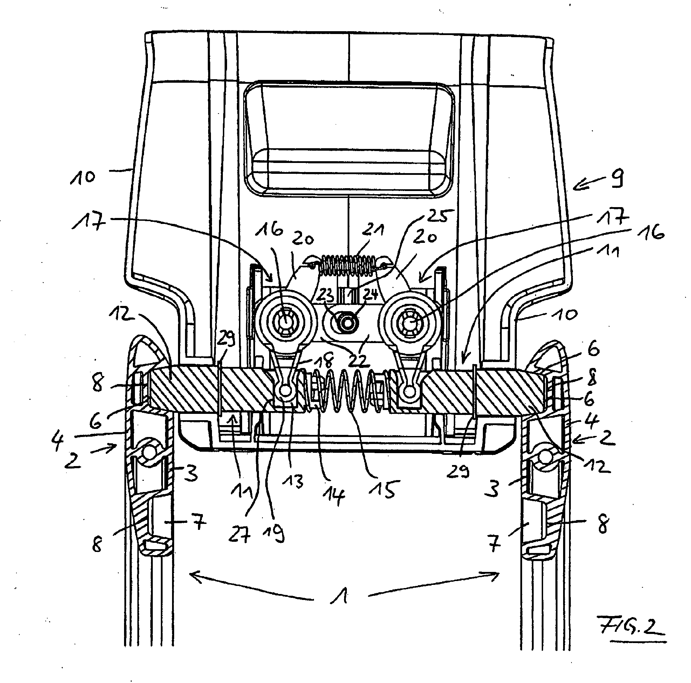

Ausführungsform gemäß der Figuren 1 und 2:

Entsprechend der Anordnung gemäß der DE 20 2006 019 121 U1 ist im Innenraum eines Kraftfahrzeuges im Bereich dessen mittlerer Konsole ein Schienenpaar 1 angeordnet, wobei die jeweilige Schiene 2 als freistehender Bügel ausgebildet ist, der in nicht gezeigter Art und Weise im Bereich seines vorderen Endes im Armaturenbrett des Fahrzeuges gelagert ist und im Bereich seines gleichfalls nicht gezeigten hinteren Endes im Boden des Fahrzeugs gelagert ist. Der mit dem Armaturenbrett verbundene Abschnitt 4 der Schienen 2 ist im wesentlichen horizontal angeordnet und es schließt sich an diesen Abschnitt 4 der Abschnitt 5 der Schienen 2 an, der stetig in Richtung des Bodens des Fahrzeugs gekrümmt ist.

Jede Schiene 2 weist, sich über deren gesamte Länge erstreckend, und auf ihrer der jeweiligen anderen Schiene 2 zugewandten Seite zwei Nuten 6 und 7 auf, die jeweils einen kegelstumpfförmigen Querschnitt aufweisen, der sich vom Nutgrund 8 der jeweiligen Führungsnut 6 bzw. 7 erweitert. Die beiden Nuten 6 der Schienen 2 dienen der Lagerung eines Containers 9 auf einem oberen Niveau der Schienen 2, die Führungsnuten 7 der Lagerung eines anderen Containers, statt dieses Containers 9, auf niedrigerem Niveau der Schienen 2.

Für das Verständnis der vorliegenden Erfindung ist ausschließlich die Lagerung des Containers 9 in den Führungsnuten 6, wie veranschaulicht, von Interesse, so dass nachfolgend nur hierauf Bezug genommen wird. Diese Lagerung betrifft nur den hinteren Bereich des Containers 9. Im vorderen Bereich des Containers erfolgt dessen Lagerung gleichfalls innerhalb der Führungsnuten 6, allerdings modifiziert, insbesondere mit einer Einrichtung nicht nur zum Führen des Containers 9 in den Schienen 2, sondern auch zum Festlegen des Containers 9 in Längserstreckung der Führungsnuten 6 bezüglich dieser. Hierauf wird aber nicht im Detail eingegangen.

Wie insbesondere der Darstellung der Figur 2 zu entnehmen, sind in einem Gehäuse 10 des aus Kunststoff bestehenden Containers 9 zwei Bolzen 11 verschieblich gelagert. Der jeweilige Bolzen 11 ist im Querschnitt kreisförmig ausgebildet. Sein dem Gehäuseinneren abgewandtes Ende ist als Vorsprung 12 ausgebildet, der einen kegelstumpfförmigen Querschnitt aufweist, entsprechend dem Querschnitt der Führungsnut 6. Im Bereich des dem Vorsprung 12 abgewandten Endes weist der Bolzen 11 eine sich senkrecht zu dessen Längserstreckung erstreckende Ausnehmung 13 auf und es ist dieses Ende als Aufnahme 14 für eine Schraubendruckfeder 15 ausgebildet. Diese ist zwischen den beiden Bolzen 11 angeordnet und spannt diese somit gegen die Führungsnuten 6 der Schienen 2 vor, wie es für den Zustand gemäß Figur 2 veranschaulicht ist.

Der jeweilige Bolzen 11 besteht aus einem günstige Gleiteigenschaften aufweisenden Kunststoff, insbesondere Polyoxymethylen-Kunststoff. Die jeweilige Schiene 2, insbesondere deren Führungsnuten 6 und 7 sind mit einer eloxierten Oberfläche versehen.

Um den Container 9 hinten, somit im Bereich der Bolzen 11 bezüglich der Schienen 2 demontieren zu können, ist es erforderlich, die Bolzen 11 so weit in das Gehäuse 10 des Containers 9 einzufahren, dass die Vorsprünge 12 der Bolzen 11 aus dem Nutquerschnitt der Führungsnuten 6 herausbewegt sind. Dies erfolgt mittels zweier im Gehäuse 10 um Achsen 16 schwenkbar gelagerter Stellglieder 17. Das jeweilige Stellglied 17 weist einen Hebel 18 auf, dessen kugelförmiges freies Ende 19 mit geringem Spiel in Stellrichtung des Bolzens 11 in die Ausnehmung 13 im Bolzen 11 eingreift. Auf seiner dem Hebel 18 abgewandten Seite ist das jeweilige Stellglied 17 mit einem weiteren Hebel 20 versehen und es greift an den beiden Hebeln 20 eine Schraubenzugfeder 21 an. Mit dem jeweiligen Stellglied 17 ist schließlich ein weiterer Hebel 22 verbunden, der auf die Achse 16 des anderen Stellgliedes 17 gerichtet ist. Die beiden Hebel 22 weisen im Bereich ihres freien Endes ein Langloch 23 auf und überlappen sich in diesem Bereich. Die beiden Langlöcher 23 durchsetzt ein stiftartiger Vorsprung 24 eines Betätigungsgriffs 25. Dieser ist in der Rückwand 26 des Containergehäuses 10 verschieblich gelagert und zwar führt eine Bewegung des Betätigungsgriffs 25 durch manuelle Einwirkung nach oben im Sinne der Darstellung der Figur 1 zu einer entsprechenden Bewegung des Vorsprungs 24 gemäß Figur 2 nach oben. Bei dieser Bewegung des Vorsprungs 24 nach oben werden die beiden Stellglieder 17 mit unterschiedlicher Drehrichtung geschwenkt und es bewegen sich die Enden 19 der Hebel 18 der Stellglieder 17 aufeinander zu, wobei die beiden Federn 15 und 21 vorgespannt werden. Durch diese Schwenkbewegung der Stellglieder 17 werden die beiden Bolzen 11 aufeinander zu bewegt und es fahren die Bolzen 11 in das Gehäuse 10 des Containers 9 ein. Wird der Betätigungsgriff 25 in seiner betätigten Stellung gehalten, verbleiben die Bolzen 11 in der eingefahrenen Position und es kann der Container 9 im Bereich der beiden hinten im Gehäuse 10 gelagerten Bolzen 11 von den Schienen 2 abgehoben werden.

Um bei demontiertem Container 9 sicherzustellen, dass der jeweilige Bolzen 11 nur unter der Wirkung der Federn 15 und 21 um ein definiertes Maß aus dem Gehäuse 10 herausbewegt wird, ist der Bolzen 11 mit einem Anschlag 29, insbesondere einem Sicherungsring versehen, der sich bei gewünschter Austrittslänge des Bolzens innen an das Gehäuse 10 anlegt.

Zum Montieren des Containers 9 im Bereich der beiden Bolzen 11 wird der Container 9 in seinem unteren Bereich zwischen den Schienen 2 positioniert und der Betätigungsgriff 25 losgelassen. Unter Einwirkung der Kraft der Federn 15 und 21 werden die Vorsprünge 12 der Bolzen 11 aus dem Gehäuse 10 ausgeschoben und in die Führungsnuten 7 eingeführt. Dieser Zustand ist in Figur 2 dargestellt.

Die zusätzliche Schraubenzugfeder 21 trägt zur Geräuschverminderung bei, da die Feder 21 dann, wenn der Betätigungsgriff 25 nicht beaufschlagt ist, die Hebel 18 der Stellglieder 17 definiert gegen die Anlagefläche 27 der Ausnehmung 13 drückt, wenn sie dem Vorsprung 12 zugewandt ist.

Vorne erfolgt die Lagerung des Containers 9 im Bereich beider Schienen 2 über gesonderte in die Führungsnuten 6 eingreifende Lagermittel 28, die nicht nur der Führung, sondern auch der Arretierung des Containers 9 in diesem vorderen Bereich dienen können. Sichtbar ist in der Figur 1 nur das der einen Schiene 2 zugeordnete Lagermittel 28.

Die Erfindung beschreibt somit eine spiel- und geräuschfreie Führung und Zentrierung des Containers, somit eines Moduls in dem Schienenpaar 1. Die besondere Zentrierung wird mit Hilfe des kegelförmigen Bolzens, der als Gleitbolzen gestaltet ist, erreicht. Befindet sich der Container in eingebauter Lage zwischen den Schienen 2, werden die kegelförmigen Bolzen 11 mittels Federkraft in die entsprechenden Querschnitt aufweisende Führungsnut 7 der Schiene 2 gedrückt. Der Anschlag 29 verhindert ein Herausgleiten des Bolzens 11 bei entnommenem Container 9 und bewirkt zum anderen eine Zentrierung des Gehäuses 9 innerhalb des Schienensystems. Die Feder 21 bewirkt die Vorspannung der Stellglieder 11. Dies führt zur Spiel-, Geräuschfreiheit der Schnittstellen der Stellglieder 17 zu Bolzen 11 sowie Stellglieder 17 zu Betätigungsgriff 25. Der konstruktive Aufbau ermöglicht auch bei ungünstigen Toleranzen der Schienen 2 durch die Lage des Anschlags 29 immer eine Zentrierung des Containers 9 in den Schienen 2. Durch die Linienberührung der kegelförmigen Gleitbolzen 11 mit der komplementären Querschnitt aufweisenden Führungsnut 7 der Schienen 2 ergibt sich, zusammen mit der eloxierten Oberfläche der Schiene, eine optimierte Gleiteigenschaft. Dies ermöglicht ein leichtes Gleiten des Containers 9 in den Schienen 2.

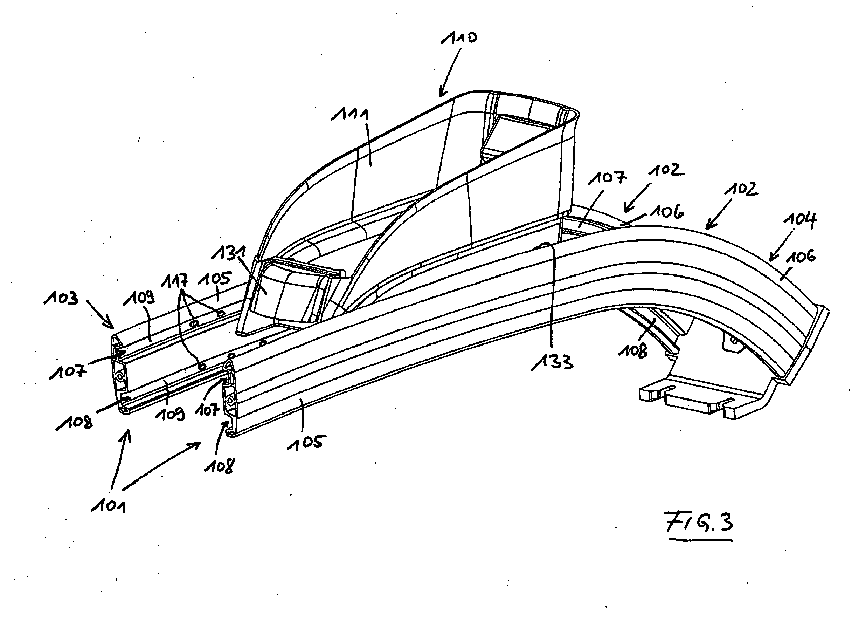

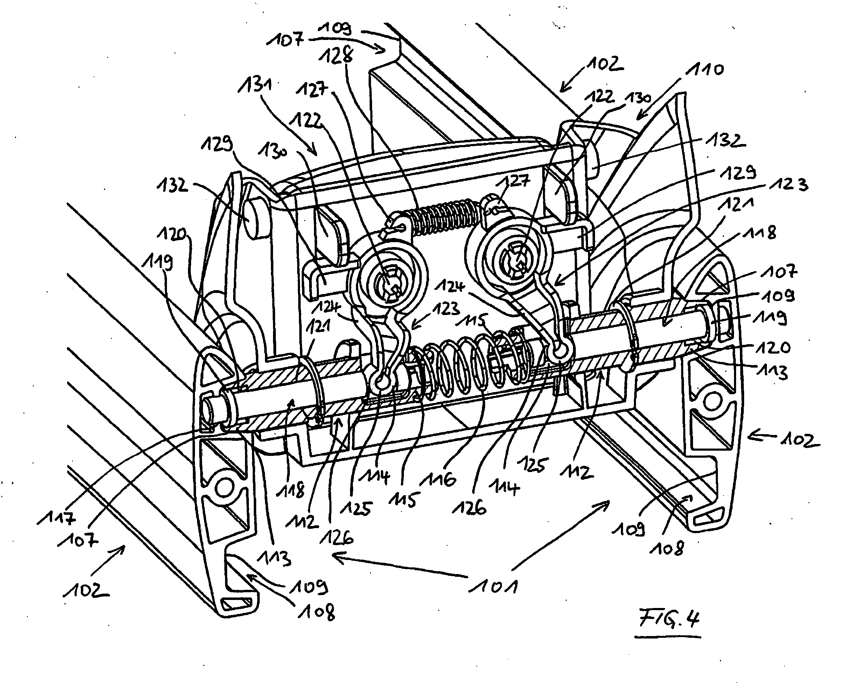

Ausführungsform gemäß den Figuren 3 und 4:

Entsprechend der Anordnung gemäß der DE 20 2006 019 121 U1 ist im Innenraum eines Kraftfahrzeuges im Bereich dessen mittlerer Konsole ein Schienenpaar 101 angeordnet, wobei die jeweilige Schiene 102 als freistehender Bügel ausgebildet ist, der in nicht gezeigter Art und Weise im Bereich seines vorderen Endes 103 im Armaturenbrett des Fahrzeugs und im Bereich seines hinteren Endes 104 im Boden des Fahrzeugs gelagert ist. Der mit dem Armaturenbrett verbundene Abschnitt 105 der Schienen 102 ist im Wesentlichen horizontal angeordnet und es schließt sich an diesen Abschnitt 105 der Abschnitt 106 der Schienen an, der stetig in Richtung des Bodens des Fahrzeugs gekrümmt ist.

Jede Schiene 102 weist, sich über deren gesamte Länge erstreckend, und auf ihrer der jeweiligen anderen Schiene 102 zugewandten Seite zwei Führungsnuten 107 und 108 auf, die jeweils einen kegelstumpfförmigen Querschnitt aufweisen, der sich vom Nutgrund 109 der jeweiligen Führungsnut 107 bzw. 108 erweitert. Die beiden Nuten 107 der Schienen 102 dienen der Lagerung eines Containers 110 auf einem oberen Niveau der Schienen 102, die Führungsnuten 108 der Lagerung eines anderen Containers, statt dieses Containers 110, auf einem niedrigerem Niveau der Schienen 102.

Für das Verständnis der vorliegenden Erfindung ist ausschließlich die Lagerung des Containers 110 in den Führungsnuten 107, wie veranschaulicht, von Interesse, so dass nachfolgend nur hierauf Bezug genommen wird. Diese Lagerung betrifft nur den vorderen Bereich des Containers 110. Im hinteren Bereich des Containers erfolgt dessen Lagerung gleichfalls innerhalb der Führungsnuten 107, allerdings modifiziert, mit einer Einrichtung nur zum Führen des Containers 110 in den Schienen 102. Hierauf wird aber nicht im Detail eingegangen.

Wie insbesondere der Darstellung der Figur 2 zu entnehmen ist, sind in einem Gehäuse 111 des aus Kunststoff bestehenden Containers 110 zwei Bolzen 112 verschieblich gelagert. Der jeweilige Bolzen 112 ist im Querschnitt kreisförmig ausgebildet. Sein dem Gehäuseinneren abgewandtes Ende ist als Vorsprung 113 ausgebildet, der einen kegelstumpfförmigen Querschnitt aufweist, entsprechend dem Querschnitt der Führungsnut 107. Im Bereich des dem Vorsprung 113 abgewandten Endes weist der Bolzen 112 eine sich senkrecht zu dessen Längserstreckung erstreckende Ausnehmung 114 auf und es ist dieses Ende als Aufnahme 115 für eine Schraubendruckfeder 116 ausgebildet. Diese ist zwischen den beiden Bolzen 112 angeordnet und spannt diese somit gegen die Führungsnuten 107 der Schienen 102 vor, wie es für den Zustand gemäß Figur 2 veranschaulicht ist.

Der jeweilige Bolzen 112 besteht aus einem günstige Gleiteigenschaften aufweisenden Kunststoff, insbesondere Polyoxymethylen-Kunststoff. Die jeweilige Schiene 102, insbesondere deren Führungsnuten 107 und 108 sind mit einer eloxierten Oberfläche versehen.

Die jeweilige Führungsnut 107 bzw. 108 ist im geraden Abschnitt 105 der jeweiligen Schiene 102 mit den Nutgrund 109 durchsetzenden, bezogen auf die Längserstreckung des Abschnitts 105 in Abstand zueinander angeordneten Löchern 117 versehen. Diese dienen der Aufnahme eines dem jeweiligen Bolzen 112 zugeordneten Verriegelungsstifts 118. Dieser weist kreisförmigen Querschnitt auf und ist konzentrisch zum zugeordneten Bolzen 112 in einer Durchgangsbohrung des Bolzens 112 mit geringem Spiel geführt. Im Bereich seines dem Gehäuse 111 abgewandten Endes weist der Verriegelungsstift 118 einen Außendurchmesser auf, der geringfügig geringer ist als der Innendurchmesser des Loches 117. In Abstand zu diesem freien Ende ist der Verriegelungsstift 118 mit einem Anschlag 119 versehen, der innerhalb eines Rücksprungs 120 des Bolzens 112 geführt ist, womit der Außendurchmesser des Anschlags 119 dem Innendurchmesser des Rücksprungs 120 angepasst ist. Beim Verschieben des Verriegelungsstifts 118 relativ zum Bolzen 112 in Richtung des Gehäuses 111 kontaktiert der Anschlag 119 aufgrund seiner axialen Bewegung den Bolzen 112. Der Bolzen 112 ist am äußeren Umfang mit einem Anschlag 121 versehen, der als Sicherungsring gestaltet ist, womit der Bolzen 112 nur geringfügig weiter aus dem Gehäuse 111 ausfahren kann, als es der gezeigten Kontaktposition von Vorsprung 113 und Führungsnut 107 bei montiertem Container 110 entspricht.

Um den Container 110 vorne, somit im Bereich der Bolzen 112 und der Verriegelungsstifte 118 entarretieren und anschließend demontieren zu können, ist es erforderlich, die Verriegelungsstifte 118 und die Bolzen 112 soweit in das Gehäuse 111 des Containers 110 einzufahren, dass die Verriegelungsstifte 118 aus den Löchern 117 der Schienen 102 und die Verriegelungsstifte 118 und die Bolzen 112 aus dem Nutquerschnitt der Führungsnuten 107 herausbewegt sind. Dies erfolgt mittels zweier im Gehäuse 111 um Achsen 122 schwenkbar gelagerter Stellglieder 123. Das jeweilige Stellglied 123 weist ein Hebel 124 auf, dessen kugelförmiges freies Ende 125 mit geringem Spiel in Stellrichtung des Verriegelungsstifts 118 in eine im Bereich der Ausnehmung 114 des Bolzens 112 befindliche Ausnehmung 126 des Verriegelungsstifts 118 eingreift. Auf seiner dem Hebel 124 abgewandten Seite ist das jeweilige Stellglied 123 mit einem Ansatz 127 versehen und es greift an den beiden Ansätzen 127 eine Schraubenzugfeder 128 an. Mit dem jeweiligen Stellglied 123 ist schließlich ein weiterer Hebel 129 verbunden, der vom anderen Stellglied 123 weggerichtet ist. Die beiden Hebel 129 sind synchron mittels Stellhebeln 130 nach unten schwenkbar, wobei die Stellhebel 130 Bestandteil eines von außerhalb des Gehäuses 111 zugänglichen Betätigungsgriffs 131 sind, der um eine Achse 132, die im Gehäuse 111 gelagert ist, schwenkbar ist.

Eine Schwenkbewegung des Betätigungsgriffs 131 durch manuelle Einwirkungen nach oben, führt zu einer Bewegung der Ansätze 130 nach unten und damit zum Verschwenken der Stellglieder 123 entgegen der Kraft der Schraubenzugfeder 128 mit deren Enden 125 aufeinander zu. Das jeweilige Ende 125 des Stellglieds 123 nimmt aufgrund des Formschlusses zum Verriegelungsstift 118 diesen mit, bis der Anschlag 119 des Verriegelungsstifts 118 die Stufe im Bolzen 113 kontaktiert. Ist diese Stellung erreicht, ist die Arretierung des Containers 110 aufgehoben, weil der Verriegelungsstift 118 aus dem Loch 117 der Schiene 102 bewegt ist. Beim weiteren Verschwenken des Stellglieds und damit weiteren Verschieben des Verriegelungsstifts 118 in das Innere des Gehäuses 111, nimmt der Verriegelungsstift 118 über den Anschlag 119 den Bolzen 112 mit und spannt hierbei die Schraubendruckfeder 116 stärker vor. Der Bolzen 112 wird hierdurch im Bereich seines Bolzens 113 aus der Führungsnut 107 bewegt, so dass in diesem Bereich der Container 110 demontiert werden kann.

Wird bei demontiertem Container 110 der Betätigungsgriff 131 losgelassen, kann der jeweilige Bolzen 112 unter Einwirkung der Schraubendruckfeder 116 nur begrenzt ausfahren, nämlich bis der Anschlag 121 des Bolzens 112 am Gehäuse anliegt.

Zum Montieren des Containers 110 im Bereich seines vorderen Endes wird dieser in seinem unteren Bereich zwischen den Schienen 102 positioniert und der Betätigungsgriff 131 losgelassen. Unter Einwirkung der Kraft der Federn 116 werden die Vorsprünge 113 der Bolzen 112 aus dem Gehäuse 111 geschoben und unter Einwirkung der Feder 128 die Verriegelungsstifte 118 in die Raststellung mit den Löchern 117 überführt. Die Schraubenzugfeder 128 trägt zur Geräuschverminderung bei, da die Feder dann, wenn der Betätigungsgriff 131 nicht beaufschlagt ist, die Hebel 124 der Stellglieder 123 definiert gegen die Verriegelungsstifte 118 drückt.

Hinten erfolgt die Lagerung des Containers 110, wie im Bereich des auf der einen Seite angedeuteten Bolzens 133 veranschaulicht, durch eine gegenüber der beschriebenen Ausführungsform vereinfachte Lagerung. Diese ist weitgehend entsprechend derjenigen gemäß der Erfindung aufgebaut. Es sind aber keine Verriegelungsstifte vorgesehen und es weist demzufolge der jeweilige Bolzen keine Durchgangsbohrung auf, sondern nur die Ausnehmung 114, in die das Ende 125 des Stellglieds 123 eingreift. Durch Betätigung dieser Stellglieder kann dann entgegen der Kraft der Federn 116 und 128 die Bewegung der Bolzen 112 aufeinander zu ausgeführt werden. Zum Montieren des Containers 110 in seinem hinteren Bereich ist es nur erforderlich, das Gehäuse dort in Position zu den Schienen 2 zu bringen und den Betätigungsgriff loszulassen. Unter Einwirkung der Federn gelangen die Bolzen 112 dann mit ihren Vorsprüngen 113 in Kontakt mit den Führungsnuten 107.

Bei der erfindungsgemäßen Lagerung des Containers 110 in seinem vorderen Bereich ist die Funktion der zweistufigen Betätigung so ausgeführt, dass man zwischen der Rastfunktion und der Entnahmefunktion eine spürbare Krafterhöhung wahrnimmt. Dadurch wird ein zu weites Zurückziehen der Gleitbolzen 112 und damit ein versehentliches Entnehmen des Containers 110 verhindert. Aus diesem Grund werden die beiden Federn 116 und 128 aufeinander abgestimmt. Zusätzlich kann durch ein akustisches oder haptisches Signal, beispielsweise ein leichtes Einrasten, eine weitere Sicherung gegen Fehlbedienung vorhanden sein.

### Bezugszeichenliste

- Schienenpaar: 1
- Schiene: 2
- Seite: 3
- Abschnitt: 4
- Abschnitt: 5
- Führungsnut: 6
- Führungsnut: 7
- Nutgrund: 8
- Container: 9
- Gehäuse: 10
- Bolzen: 11
- Vorsprung: 12
- Ausnehmung: 13
- Aufnahme: 14
- Schraubendruckfeder: 15
- Achse: 16
- Stellglied: 17
- Hebel: 18
- Ende: 19
- Hebel: 20
- Schraubenzugfeder: 21
- Hebel: 22
- Langloch: 23
- Vorsprung: 24
- Betätigungsgriff: 25
- Rückwand: 26
- Anlagefläche: 27
- Lagermittel: 28
- Anschlag: 29
- Schienenpaar: 101
- Schiene: 102
- Ende: 103
- Ende: 104
- Abschnitt: 105
- Abschnitt: 106
- Führungsnut: 107
- Führungsnut: 108
- Nutgrund: 109
- Container: 110
- Gehäuse: 111
- Bolzen: 112
- Vorsprung: 113
- Ausnehmung: 114
- Aufnahme: 115
- Schraubendruckfeder: 116
- Loch: 117
- Verriegelungsstift: 118
- Anschlag: 119
- Rücksprung: 120
- Anschlag: 121
- Achse: 122
- Stellglied: 123
- Hebel: 124
- Ende: 125
- Ausnehmung: 126
- Ansatz: 127
- Schraubenzugfeder: 128
- Hebel: 129
- Stellhebel: 130
- Betätigungsgriff: 131
- Achse: 132
- Bolzen: 133

## Patentansprüche

1. Lagerung eines Containers (9, 110) in einem Schienenpaar (1, 101), das in einem Fahrgastraum eines Kraftfahrzeugs angeordnet ist, wobei die Schienen (2, 102) des Schienenpaars (1, 101) auf den einander zugewandten Seiten sich im wesentlichen horizontal erstreckende Führungsnuten (6, 107) aufweisen und im Container (9, 110), auf dessen der jeweiligen Schiene (2, 102) zugewandten Seite ein Vorsprung (12, 113) gelagert ist, wobei die jeweilige Führungsnut (6, 107) einen sich vom Nutgrund (8, 109) erweiternden Querschnitt aufweist, sowie der jeweilige Vorsprung (12, 113) einen entsprechend sich zum Container (9, 110) hin erweiternden Querschnitt aufweist, **dadurch gekennzeichnet, dass** der jeweilige Vorsprung (12, 113) Bestandteil eines in dem Container (9, 110) verschieblich gelagerten Bolzens (11, 112) ist, wobei eine Feder (15, 116) auf den Bolzen (11, 112) einwirkt und dessen Vorsprung (12, 113) gegen die Führungsnut (6, 107) vorspannt, sowie der Bolzen (11, 12) mittels eines im Container (9, 110) gelagerten Stellglieds (17, 123) entgegen der Kraft der Feder (15, 116) aus der Führungsnut (6, 107) bewegbar ist.

2. Lagerung nach Anspruch 1, **dadurch gekennzeichnet, dass** der Bolzen (11, 112) aus Kunststoff besteht, vorzugsweise einem günstige Gleiteigenschaften aufweisenden Kunststoff, insbesondere aus einem Polyoxymethylen-Kunststoff besteht.

3. Lagerung nach Anspruch 1 oder 2, **dadurch gekennzeichnet, dass** der Vorsprung (12, 113), insbesondere der Bolzen (11) einen kreisförmigen Querschnitt oder eine kreisförmige Außenkontur aufweist.

4. Lagerung nach einem der Ansprüche 1 bis 3, **dadurch gekennzeichnet, dass** der Vorsprung (12. 113) als Kegelstumpf ausgebildet ist und die Führungsnut (6, 107) einen entsprechend kegelstumpfförmigen Querschnitt aufweist.

5. Lagerung nach einem der Ansprüche 1 bis 4, **dadurch gekennzeichnet, dass** die Führungsnut (6, 107) eine bezüglich Gleiteigenschaften optimierte Oberfläche, insbesondere eine eloxierte Oberfläche aufweist.

6. Lagerung nach einem der Ansprüche 1 bis 5, **dadurch gekennzeichnet, dass** die beiden Bolzen (11, 112) in einer Flucht angeordnet sind und die Feder (15, 116) die beiden Bolzen (11, 112) beaufschlagt.

7. Lagerung nach Anspruch 6, **dadurch gekennzeichnet, dass** die Feder (15, 116) als Schraubendruckfeder ausgebildet ist und in den beiden Bolzen (11, 112) gelagert ist.

8. Lagerung nach einem der Ansprüche 1 bis 7, **dadurch gekennzeichnet, dass** das jeweilige Stellglied (17, 123) mittels eines manuell betätigbaren Betätigungselements, insbesondere eines Betätigungsgriffs (25, 131) um eine stationäre Achse (16, 122) schwenkbar ist.

9. Lagerung nach Anspruch 8, **dadurch gekennzeichnet, dass** mittels des Betätigungselements (25, 131) beide Stellglieder (17, 123) gleichzeitig schwenkbar sind und an beiden Stellgliedern (17, 123) eine Zugfeder, insbesondere eine Schraubenzugfeder (21, 128) angreift.

10. Lagerung nach Anspruch 9, **dadurch gekennzeichnet, dass** das jeweilige Stellglied (17, 123) mittels der Feder (21, 128) bezüglich des Bolzens (11, 112) vorgespannt ist, insbesondere entsprechend der Vorspannung der anderen auf den Bolzen (11, 112) einwirkenden Feder (15, 116).

11. Lagerung nach einem der Ansprüche 1 bis 10, **dadurch gekennzeichnet, dass** das jeweilige Stellglied (17, 123) einen Hebelarm (18, 123) aufweist, der in eine Ausnehmung (13, 114) des Bolzens (11, 112) eingreift.

12. Lagerung nach einem der Ansprüche 1 bis 11, **dadurch gekennzeichnet, dass** der Bolzen (11, 112) mit einem Anschlag (29, 121) zum Begrenzen der Bewegung des Bolzens (11, 112) in Richtung der Führungsnut (6, 107) versehen ist.

13. Lagerung nach einem der Ansprüche 1 bis 12, **dadurch gekennzeichnet, dass** Mittel (118) zur verriegelten Lagerung des Containers (110) im Schienenpaar (110) vorgesehen sind, wobei der jeweilige Bolzen (112) mittels Federkraft aus dem Gehäuse (111) des Containers (110) schiebbar ist, sowie der jeweilige Bolzen (112) das Mittel (118) zum Verriegeln verschieblich aufnimmt, das als Verriegelungsstift (118) ausgebildet ist, wobei die diesem Verriegelungsstift (118) zugewandte Führungsnut (107) mindestens eine Ausnehmung (17) zur Aufnahme des Verriegelungstifts (118) aufweist, wobei ferner der Verriegelungsstift (118) mittels Federkraft in Richtung dieser Führungsnut (107) vorgespannt ist und der Verriegelungsstift (118) mittels eines im Container (110) gelagerten Stellglieds (123) in dessen Längsrichtungen verschiebbar ist, sowie dieser Verriegelungsstift (118) mit einem Anschlag (119) versehen ist, der den Bolzen (112) beim Verschieben des Verriegelungstifts (118) in den Container (110) kontaktiert.

14. Lagerung nach Anspruch 13, **dadurch gekennzeichnet, dass** der Bolzen (112) einen Anschlag (121) zum Begrenzen der Ausfahrbewegung des Bolzens (112) durch Anlage des Anschlags (121) an dem Gehäuse (111) des Containers (110) aufweist.

15. Lagerung nach Anspruch 13 oder 14, **dadurch gekennzeichnet, dass** der Verriegelungsstift (118) einen Kreisquerschnitt aufweist und die jeweilige Ausnehmung (117) zur Aufnahme des Verriegelungsstifts (118) einen geringfügig größeren Kreisquerschnitt aufweist.

16. Lagerung nach einem der Ansprüche 13 bis 15, **dadurch gekennzeichnet, dass** das jeweilige Stellglied (123) mittels der Feder (128) bezüglich des Verriegelungsstifts (118) vorgespannt ist, in einer Vorspannrichtung, die der Vorspannrichtung des jeweiligen Bolzens (112) unter Einwirkung dessen zugeordneter Feder (116) entspricht.

17. Lagerung nach einem der Ansprüche 13 bis 16, **dadurch gekennzeichnet, dass** das der Führungsnut (107) zugewandte Ende des Bolzens (112) mit einem inneren Rücksprung (120) versehen ist, den der Anschlag (119) am Verriegelungsstift (118) durchsetzt.

18. Lagerung nach einem der Ansprüche 1 bis 17, **dadurch gekennzeichnet, dass** die jeweilige Schiene (102) im Bereich der Führungsnut (107) mit mehreren, in Längsrichtung der Führungsnut (107) angeordneten Ausnehmungen (117) versehen ist.

19. Lagerung nach einem der Ansprüche 1 bis 18, **dadurch gekennzeichnet, dass** die jeweilige Schiene (2, 102) gebogen und im Bereich eines Endes im Boden des Kraftfahrzeuges und im Bereich des anderen Endes im Boden oder einer Armaturentafel des Kraftfahrzeuges gelagert ist, wobei die jeweilige Schiene (2, 102) in einem oberen, im wesentlichen waagerecht verlaufenden Bereich die Führungsnut (6, 107) aufweist.

20. Lagerung nach einem der Ansprüche 1 bis 19, **dadurch gekennzeichnet, dass** eine Einrichtung (28, 118) zum formschlüssigen Festlegen von Container (9, 110) und mindestens einer Schiene (2, 102) des Schienenpaares (1, 101), in Längsrichtung der Schiene (102), vorgesehen ist.

## Claims

1. Bearing of a container (9, 110) in a pair (1, 101) of rails which is arranged in a passenger compartment of a motor vehicle, with the rails (2, 102) of the pair (1, 101) of rails comprising guide grooves (6, 107) extending substantially horizontally on the mutually facing sides, and a projection (12, 113) being held in the container (9, 110) on its side facing the respective rail (2, 102), with the respective guide groove (6, 107) having a cross-section expanding from the base of the groove (8, 109), and the respective projection (12, 113) having a cross-section accordingly expanding to the container (9, 110), **characterized in that** the respective projection (12, 113) is a component of a pin (11, 112) which is displaceably held in the container (9, 110), with a spring (15, 116) acting on the pin (11, 112) and pretensioning its projection (12, 113) against the guide groove (6, 107), and with the pin (11, 12) being movable out of the guide groove (6, 107) against the force of the spring (15, 116) by means of an actuating member (17, 123) held in the container (9, 110).

2. A bearing according to claim 1, **characterized in that** the pin (11, 112) consists of plastic, preferably a plastic having favorable sliding properties, especially a polyoxymethylene plastic.

3. A bearing according to claim 1 or 2, **characterized in that** the projection (12, 113), especially the pin (11), has a circular cross-section or a circular outer contour.

4. A bearing according to one of the claims 1 to 3, **characterized in that** the projection (12, 113) is arranged as a truncated cone and the guide groove (6, 107) has a cross-section which is respectively shaped in the manner of a truncated cone.

5. A bearing according to one of the claims 1 to 4, **characterized in that** the guide groove (6, 107) has a surface which is optimized with respect to sliding properties, especially an anodized surface.

6. A bearing according to one of the claims 1 to 5, **characterized in that** the two pins (11, 112) are arranged in one alignment and the spring (15, 116) pressurizes the two pins (11, 112).

7. A bearing according to claim 6, **characterized in that** the spring (15, 116) is arranged as a helical compression spring and is held in the two pins (11, 112).

8. A bearing according to one of the claims 1 to 7, **characterized in that** the respective actuating member (17, 123) is pivotable about a stationary axis (16, 112) by means of a manually actuatable actuating element, especially an actuating handle (25, 131).

9. A bearing according to claim 8, **characterized in that** both actuating members (17, 123) are simultaneously pivotable by means of the actuating element (25, 131), and a tension spring, especially a helical compression spring (21, 128), acts on both actuating members (17, 123).

10. A bearing according to claim 9, **characterized in that** the respective actuating member (17, 123) is pretensioned by means of the spring (21, 128) with respect to the pin (11, 112), especially according to the pretension of the other spring (15, 116) acting on the pin (11, 112).

11. A bearing according to one of the claims 1 to 10, **characterized in that** the respective actuating member (17, 123) comprises a lever arm (18, 123) which engages into a recess (13, 114) of the pin (11, 112).

12. A bearing according to one of the claims 1 to 11, **characterized in that** the pin (11, 112) is provided with a limit stop (29, 121) for delimiting the movement of the pin (11, 112) in the direction of the guide groove (6, 107).

13. A bearing according to one of the claims 1 to 12, **characterized in that** means (118) are provided for locked bearing of the container (110) in the pair (110) of rails, with the respective pin (112) being movable by means of spring force from the housing (111) of the container (110), and the respective pin (112) movably accommodates the means (118) for locking, which means (118) is arranged as a locking pin (118), with the guide groove (107) facing said locking pin (118) comprising at least one recess (17) for accommodating the locking pin (118), with further the locking pin (118) being pretensioned by means of spring force in the direction of said guide groove (107), and the locking pin (118) being displaceable in its longitudinal directions by means of an actuating member (123) mounted in the container (110), and said locking pin (118) is provided with a limit stop (119) which contacts the pin (112) during displacement of the locking pin (118) in the container (110).

14. A bearing according to claim 13, **characterized in that** the pin (112) comprises a limit stop (121) for limiting the extension movement of the pin (112) by placing the limit stop (121) on the housing (111) of the container (110).

15. A bearing according to claim 13 or 14, **characterized in that** the locking pin (118) has a circular cross-section and the respective recess (117) for accommodating the locking pin (118) has a slightly larger circular cross section.

16. A bearing according to one of the claims 13 to 15, **characterized in that** the respective actuating member (123) is pretensioned by means of the spring (128) with respect to the locking pin (118) in a pretensioning direction which corresponds to the pretensioning direction of the respective pin (112) under action of its associated spring (116).

17. A bearing according to one of the claims 13 to 16, **characterized in that** the end of the pin (112) facing the guide groove (107) is provided with an inner offset (120) which is penetrated by the limit stop (119) on the locking pin (118).

18. A bearing according to one of the claims 1 to 17, **characterized in that** the respective rail (102) is provided in the region of the guide groove (107) with several recesses (117) arranged in the longitudinal direction of the guide groove (107).

19. A bearing according to one of the claims 1 to 18, **characterized in that** the respective rail (2, 102) is bent and is held in the region of one end in the floor of the motor vehicle and in the region of the other end in the floor or a dashboard of the motor vehicle, with the respective rail (2, 102) comprising the guide groove (6, 107) in an upper region which extends in a substantially horizontal way.

20. A bearing according to one of the claims 1 to 19, **characterized in that** a device (28, 118) is provided for the interlocking fixing of the container (9, 110) and at least one rail (2, 102) of the pair (1, 101) of rails, in the longitudinal direction of said rail (102).

## Revendications

1. Appui d'un conteneur (9, 110) dans une paire de rails (1, 101) disposée dans l'habitacle d'un véhicule à moteur, les rails (2, 102) de la paire de rails (1, 101) présentant sur leurs côtés qui se font face des gorges de guidage (6, 107) sensiblement horizontales et une saillie (12, 113) étant supportée dans le conteneur (9, 110) sur le côté de celui-ci tourné vers le rail (2, 102) correspondant, chaque gorge de guidage (6, 107) s'élargissant en section à partir du fond de la gorge (8, 109) et chaque saillie (12, 113) présentant une section qui s'élargit de manière correspondante en direction du conteneur (9, 110), **caractérisé en ce que** chaque saillie (12, 113) fait partie d'un goujon (11, 112) supporté de façon coulissante dans le conteneur (9, 110), un ressort (15, 116) agissant sur le goujon (11, 112) et précontraignant la saillie (12, 113) de celui-ci vers la gorge de guidage (6, 107), et le goujon (11, 12) pouvant être déplacé hors de la gorge de guidage (6, 107) au moyen d'un organe de réglage (17, 123) supporté dans le conteneur (9, 110) contre la force du ressort (15, 116).

2. Appui selon la revendication 1, **caractérisé en ce que** le goujon (11, 112) est en plastique, de préférence un plastique présentant des propriétés de glissement favorables, en particulier un plastique à base de polyoxyméthylène.

3. Appui selon la revendication 1 ou 2, **caractérisé en ce que** la saillie (12, 113), en particulier le goujon (11), a une section circulaire ou un contour extérieur circulaire.

4. Appui selon l'une des revendications 1 à 3, **caractérisé en ce que** la saillie (12, 113) est en forme de tronc de cône et la gorge de guidage (6, 107) présente une section tronconique correspondante.

5. Appui selon l'une des revendications 1 à 4, **caractérisé en ce que** la gorge de guidage (6, 107) possède une surface optimisée en termes de propriétés de glissement, en particulier une surface anodisée.

6. Appui selon l'une des revendications 1 à 5, **caractérisé en ce que** les deux goujons (11, 112) sont disposés en alignement et le ressort (15, 116) contraint les deux goujons (11, 112).

7. Appui selon la revendication 6, **caractérisé en ce que** le ressort (15, 116) est conformé comme un ressort hélicoïdal de compression et supporté dans les deux goujons (11, 112).

8. Appui selon l'une des revendications 1 à 7, **caractérisé en ce que** chaque organe de réglage (17, 123) peut être basculé autour d'un axe stationnaire (16, 122) au moyen d'un élément d'actionnement à actionnement manuel, en particulier d'une poignée d'actionnement (25, 131).

9. Appui selon la revendication 8, **caractérisé en ce que** les deux organes de réglage (17, 123) peuvent être basculés en même temps au moyen de l'élément d'actionnement (25, 131) et un ressort de traction, en particulier un ressort hélicoïdal de traction (21, 128), se met en prise sur les deux organes de réglage (17, 123).

10. Appui selon la revendication 9, **caractérisé en ce que** chaque organe de réglage (17, 123) est précontraint au moyen du ressort (21, 128) par rapport au goujon (11, 112), de préférence d'une manière correspondant à la précontrainte par l'autre ressort (15, 116) agissant sur le goujon (11, 112).

11. Appui selon l'une des revendications 1 à 10, **caractérisé en ce que** chaque organe de réglage (17, 123) présente un bras de levier (18, 123) qui se met en prise dans un évidement (13, 114) du goujon (11, 112).

12. Appui selon l'une des revendications 1 à 11, **caractérisé en ce que** le goujon (11, 112) est muni d'une butée (29, 121) pour limiter le mouvement du goujon (11, 112) en direction de la gorge de guidage (6, 107).

13. Appui selon l'une des revendications 1 à 12, **caractérisé en ce que** des moyens (118) sont prévus pour l'appui verrouillé du conteneur (110) dans la paire de rails (110), chaque goujon (112) pouvant être déplacé au moyen de la force du ressort hors du boîtier (111) du conteneur (110) et chaque goujon (112) recevant de façon coulissante le moyen (118) de verrouillage qui est conçu comme une goupille de verrouillage (118), la gorge de guidage (107) tournée vers cette goupille de verrouillage (118) présentant au moins un évidement (17) pour recevoir la goupille de verrouillage (118), la goupille de verrouillage (118) étant en outre précontrainte au moyen de la force d'un ressort en direction de cette gorge de guidage (107) et la goupille de verrouillage (118) pouvant être déplacée au moyen d'un organe de réglage (123) supporté dans le conteneur (110) dans le sens de la longueur de celui-ci et cette goupille de verrouillage (118) étant munie d'une butée (119) qui vient en contact avec le goujon (112) lors du déplacement de la goupille de verrouillage (118) dans le conteneur (110).

14. Appui selon la revendication 13, **caractérisé en ce que** le goujon (112) présente une butée (121) destinée à limiter le mouvement de sortie du goujon (112) quand la butée (121) vient reposer sur le boîtier (111) du conteneur (110).

15. Appui selon la revendication 13 ou 14, **caractérisé en ce que** la goupille de verrouillage (118) présente une section circulaire et chaque évidement (117) destiné à recevoir une goupille de verrouillage (118) présente une section circulaire légèrement plus grande.

16. Appui selon l'une des revendications 13 à 15, **caractérisé en ce que** chaque organe de réglage (123) est précontraint au moyen du ressort (128) par rapport à la goupille de verrouillage (118) dans une direction de précontrainte qui correspond à la direction de précontrainte de chaque goujon (112) sous l'action du ressort (116) associé à celui-ci.

17. Appui selon l'une des revendications 13 à 16, **caractérisé en ce que** l'extrémité du goujon (112) tournée vers la gorge de guidage (107) est munie d'un épaulement intérieur (120) qui traverse la butée (119) de la goupille de verrouillage (118).

18. Appui selon l'une des revendications 1 à 17, **caractérisé en ce que** chaque rail (102) est muni au niveau de la gorge de guidage (107) de plusieurs évidements (117) disposés dans le sens longitudinal de la gorge de guidage (107).

19. Appui selon l'une des revendications 1 à 18, **caractérisé en ce que** chaque rail (2, 102) est courbe et supporté au niveau d'une extrémité dans le plancher du véhicule à moteur et au niveau de l'autre extrémité dans le plancher ou un tableau de bord du véhicule à moteur, chaque rail (2, 102) présentant la gorge de guidage (6, 107) dans une partie supérieure sensiblement horizontale.

20. Appui selon l'une des revendications 1 à 19, **caractérisé en ce qu'**il est prévu un dispositif (28, 118) pour la fixation par engagement positif du conteneur (9, 110) et d'au moins un rail (2, 102) de la paire de rails (1, 101) dans le sens longitudinal du rail (102).
